(19)

Europäisches
Patentamt
European
Patent Office
Office européen
des brevets

(11)     **EP 2 110 273 B1**

(12)            **EUROPEAN PATENT SPECIFICATION**

(45) Date of publication and mention
of the grant of the patent:
**27.03.2013  Bulletin 2013/13**

(51) Int Cl.:
**B60G 15/06** *(2006.01)*     **F16F 9/54** *(2006.01)*

(21) Application number: **08425268.3**

(22) Date of filing: **18.04.2008**

(54) **Resilient support device for the upper end of the stem of a shock-absorber of a motor-vehicle suspension**

Federbeinstützlager in einer Fahrzeugaufhängung mit elastischer Lagerung für die Kolbenstange eines Schwingungsdämpfers

Support en matière élastique pour la fixation supérieure d'un amortisseur de suspension d'un véhicule automobile

<table>
<tr><td>

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**21.10.2009  Bulletin 2009/43**

(73) Proprietor: **Fiat Group Automobiles S.p.A.**
**10135 Torino (TO) (IT)**

(72) Inventors:
• **Pasquale, Federico**
  **10135 Torino (IT)**
• **Nicoletta, Alberto**
  **10135 Torino (IT)**
• **Caudano, Massimo**
  **10135 Torino (IT)**

</td><td>

(74) Representative: **Notaro, Giancarlo**
**Buzzi, Notaro & Antonielli d'Oulx**
**Via Maria Vittoria 18**
**10123 Torino (IT)**

(56) References cited:
**EP-A- 0 063 016         EP-A- 0 885 757**
**EP-A- 1 306 238         DE-A1- 3 439 614**
**DE-A1- 4 139 377        DE-U1- 8 119 912**
**FR-A- 817 656           GB-A- 434 583**
**JP-A- 57 182 503        US-A- 2 352 586**
**US-A- 2 783 959         US-A- 3 831 920**
**US-A- 3 952 546         US-A- 4 477 061**
**US-A- 4 958 812         US-A- 5 186 440**
**US-A- 5 449 152         US-A- 5 487 535**
**US-A1- 2005 063 630     US-B1- 6 290 218**

</td></tr>
</table>

**Description**

The present invention relates to a resilient support device of the type indicated in the preamble of claim 1. A device of this type is known from US-A-5 487 535. Similar devices are also known from US-A-2005/063630, DE-A-4139377, US-A-5 186 440, EP-A-0063016, FR-A-817658, US-A-5 449 152, US-A-3 831 920, DE-U-8119912, US-A-2 352 586, US-A-4 958 812 AND EP-A-1 306 238.

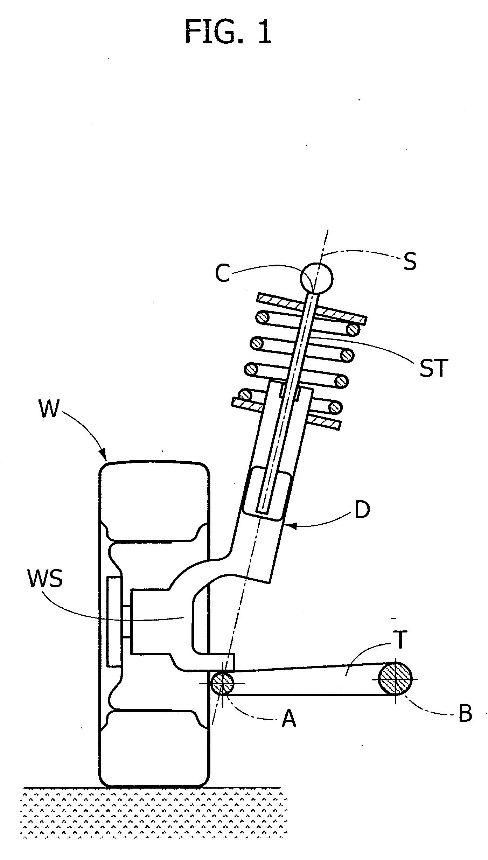

Figure 1 of the attached drawings diagrammatically shows a MacPherson type suspension for a motor-vehicle wheel. According to such a conventional diagram, a wheel W is rotatably mounted on a wheel support WS which is pivotally connected in A to a lower triangle T (of which only one of the arms is visible in Figure 1) whose opposite end is articulated in B to the bodywork of the motor-vehicle or to a support frame for the suspension mechanical parts. The wheel support WS is also firmly connected to the body of a fluid shock-absorber D, of any known type, whose stem ST has its upper end C connected to the bodywork through a shock-absorber block of the aforementioned type. The articulation A is a spherical articulation, whereby the axis S of the shock-absorber D defines the steering axis of the wheel W.

In the MacPherson suspension of the type shown in Figure 1, the shock-absorber D performs a structural function, because it is an element whose role is to support the weight of the motor-vehicle resting on the wheel and to maintain the wheel in the correct position. For this reason, the shock-absorber is subjected to both static and dynamic bending stress.

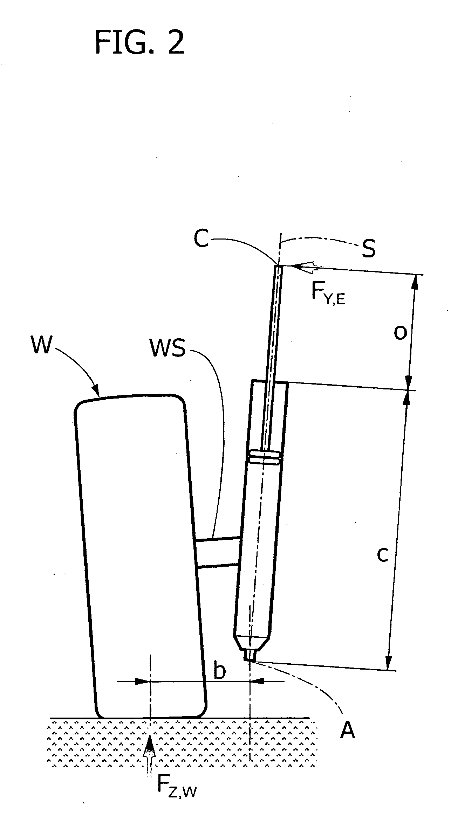

Figure 2 of the attached drawings shows a simplified diagram of the suspension of Figure 1. The wheel W receives from the ground a reaction force $\mathbf{F_{z,w}}$ equal to the part of the motor-vehicle's weight resting on the wheel. Such a force determines a bending moment $\mathbf{M}$ with respect to the lower joint A of the upright equal to

$$\mathbf{M \ = \ F_{z,w} \ \cdot \ b}$$

Wherein $\mathbf{b}$ is the distance shown in Figure 2.

Due to this bending moment, on the upper end C of the upright a radial transversal load is applied $\mathbf{F_{Y,E}}$ equal to

$$\mathbf{F_{Y,E} = \ F_{z,w} \ \cdot \ b/(c+o)}$$

Wherein $\mathbf{c}$ and $\mathbf{o}$ are the distances shown in Figure 2.

In the suspensions of the type described above, the upper end C of the shock-absorber is connected to the bodywork of the motor-vehicle with the interposition of a bushing made of elastomer material (not shown in Figure 1). Such an element is mainly characterised by its elastic coefficients in the axial and radial directions.

Considering the elastic coefficient in the axial direction $K_{axial}$, which expresses the force/deformation ratio for movements in an axial direction, it is necessary to consider that at the cruising speed for small amplitudes and high vibrational input frequencies (rough road, grooved tyres) the shock-absorber tends to get blocked and in these conditions the elastic bushing represents the only element adapted to filter the vibrations. In such a circumstance, it is essential for $K_{axial}$ to be as small as possible. However, when the road is disconnected, with sensitive bodywork oscillation motions, it is necessary for the shock-absorber to dissipate the oscillation energy; and in order for it to work efficiently the block must be deformed as little as possible. Therefore, a small $K_{axial}$ coefficient is necessary for the small vertical oscillations of the vehicle determining small axial movements of the bushing; in order to filter the noise. Then when the forces increase, because of road disconnections for example, then the $K_{axial}$ coefficient must be large in order to have small relative movements of the parts connected by the bushing, hence allowing a high sliding of the shock-absorber for the dissipation of the motor-vehicle's oscillation energy.

With regard to the radial direction the load whose upper end of the shock-absorber is subject for the specific nature of the MacPherson architecture produces a bushing deformation and a consequent relative movement between the parts connected by it. This movement must be as small as possible so as to obtain good handling characteristics of the motor-vehicle. This requirement needs a bushing with high stiffness in the radial direction to be used, that is with a high $\mathbf{K_{RADIAL}}$ coefficient value, which expresses the force/deformation ratio for movements in a radial direction. However, this high stiffness is counterproductive for obtaining good filtering of the vibrations and noise.

However it can be observed that at cruising speed (e.g. on the motorway), the motion of the vehicle is uniform and the forces in play are small. In such a condition, the filtering of the noise is more important than obtaining good handling and hence the elastic coefficient in a radial direction $K_{radial}$ must be small. On the other hand, since in such a condition the forces are low, the relative movements are hence small whereby the good handling requirements can also be respected.

Instead in transient conditions (acceleration, bend) the forces in play are large, whereby in such a condition the requirement for good handling is more important than obtaining good noise filtering. In such conditions, therefore, the radial stiffness $K_{radial}$ must be large. On the other hand, even if the forces in play are large, a high stiffness means that the relative movements between the parts connected by the bushing remain small anyway, whereby the upright effectively performs both the function of driving the wheel and the function of supporting the vehicle anyway.

Starting from the aforementioned considerations, the Applicant has pursued the object of providing a resilient support device of the type indicated in the introduction of the present description, on one hand enabling all the aforementioned requirements to be satisfied, and which, on the other hand, is relatively simple and reliable.

In view of achieving this object, the invention provides a resilient support device having all the characteristics indicated in claim 1.

In the case of the present invention, the stiffness of the bushing both in the radial direction and the axial direction varies according to a substantially parabolic diagram when the amount of the movement varies, with a minimum for a substantially zero movement and two branches following a parabolic increase when the displacement with respect to the static position increases, in one direction or the other. It is to be noted that such variation curves are obtained with rubbers having a low Shore number, which is an important condition in order to guarantee good vibration filtering.

In the resilient support device according to the invention, such a result is obtained simultaneously to obtaining an "isostress" behaviour of the bushing body with regard to the shearing stress generated by relative axial movements between the structures connected by the bushing. The fundamental result of the invention is that of simultaneously creating an "isostress" behaviour of the bushing with regard to the shearing stress generated by the axial movements on one hand, and on the other hand a progressive variation of the stiffness of the bushing, both in the radial direction, and the axial direction, as the relative movements of the parts between which the bushing is interposed increase, according to a substantially parabolic variation. This is obtained also using low Shore number rubbers.

Further characteristics and advantages of the invention will be clear in the following description with reference to the attached drawings, provided by way of a non-limiting example, in which:

- Figures 1 and 2, already discussed above, show diagrams of a known type of MacPherson suspension,
- Figure 3 is an enlarged sectional view of the resilient support device according to a preferred embodiment of the present invention,
- Figure 3A is a perspective sectional view of the device in Figure 3,
- Figure 4 is an enlarged partial schematic view of the bushing of the device according to the invention,
- Figure 5 shows a diagram of the stiffness variation of the device according to the invention, and
- Figures 6-8 are an overall view of the suspension unit incorporating the device according to the invention, an elevational view of the entire shock-absorber incorporating the device according to the invention and a perspective sectional view of the upper part of the shock-absorber.

Figures 1 and 2 of the attached drawings, which show an example and a diagram of a conventional MacPherson type suspension have already been discussed above.

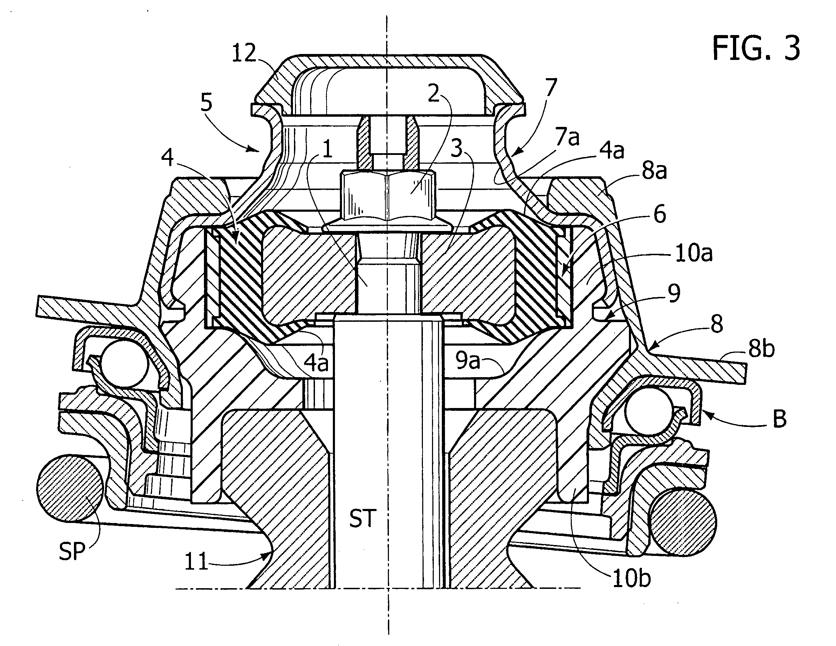

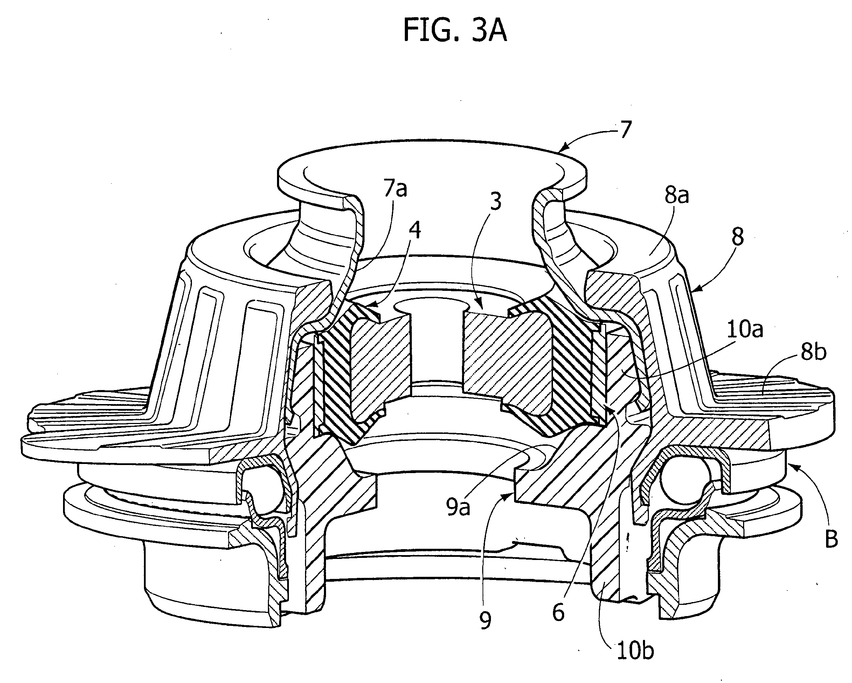

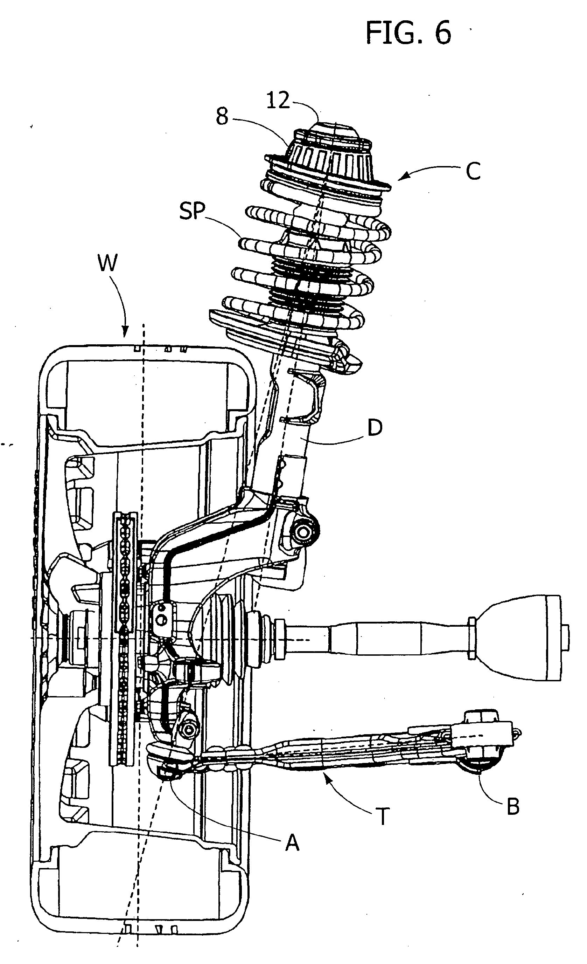

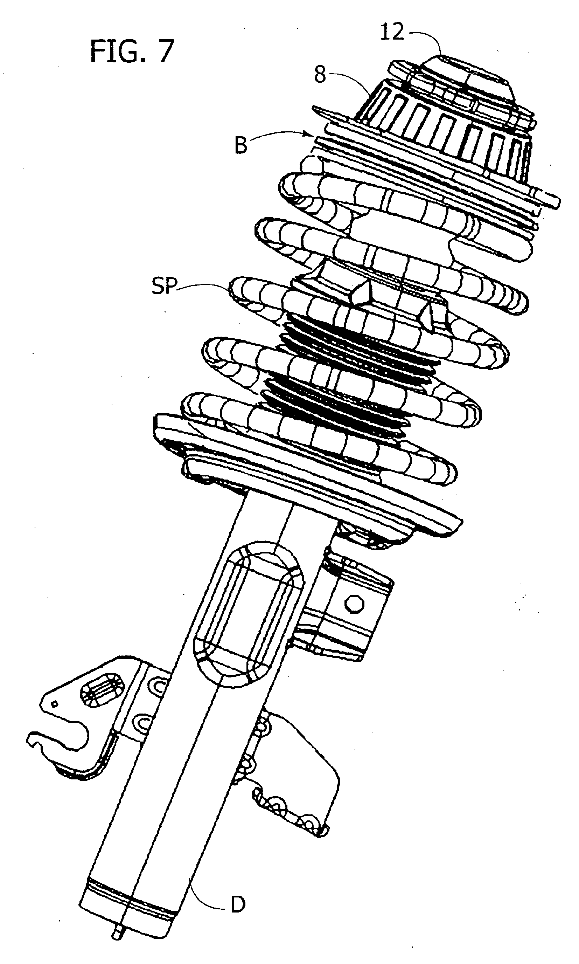

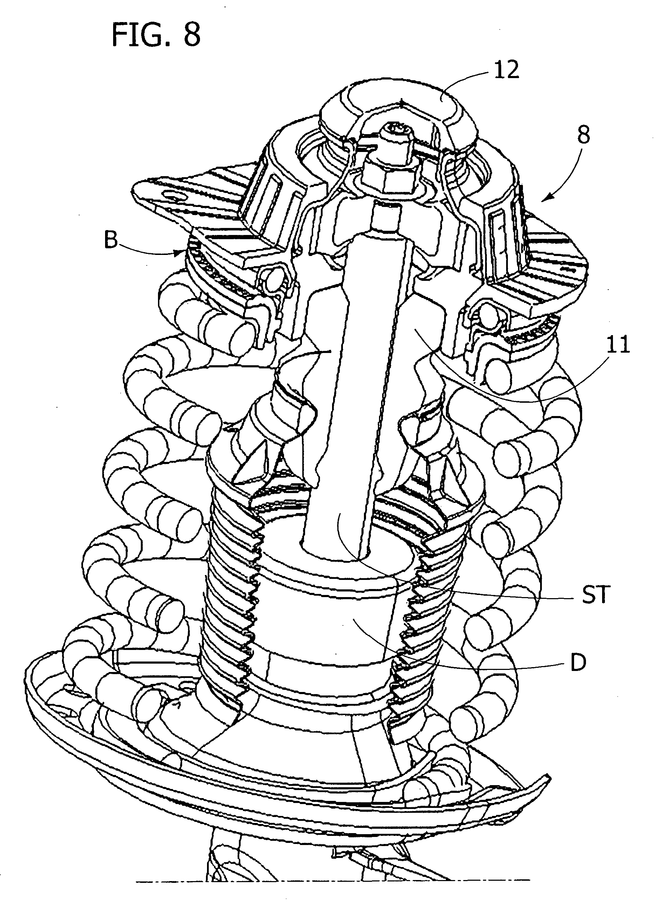

Figures 3 and 3A show a preferred embodiment of the device according to the invention. Figures 6-8 show the suspension unit and the shock-absorber unit incorporating the device according to the invention. In such figures the parts corresponding to those shown in Figures 1 and 2 are indicated with the same references. In the Figures, 1 indicates the upper end of the stem ST of the shock-absorber of a MacPherson suspension of the type shown in Figure 1. On the upper end 1 of the stem ST using a nut 2 an aluminium ring 3 is fixed, onto which a bushing made of elastomer material 4 is vulcanised. The bushing 4 cooperates on its external side with a structure, indicated overall with the reference number 5 fixed, in any known way, to the bodywork of the motor-vehicle. In the example shown, the structure 5 comprises a sleeve 6 made of plastic material, assembled in interference within the upper end 10a of a cylindrical body 9 made of plastic material, whose lower end 10b houses the upper end of a rubber plug 11, of a known type per se (only partially visible in Figure 3). The structure 5 also comprises a sheet metal bell element 7 whose lower end receives and internally blocks the circumferential upper edge of the body 9 made of plastic material. An anti-dust cap 12 is mounted on the upper end of the bell element 7.

Around the bell element 7 and the body 9 made of plastic material, a rubber annular body 8 is mounted, having an upper portion 8a destined to rest against a corresponding part of the motor-vehicle's bodywork (not shown) and a lower annular flange 8b against which the upper end of the suspension spring SP rests, with the interposition of a ball bearing B. Figures 6-8 show the shock-absorber unit overall and the whole suspension unit.

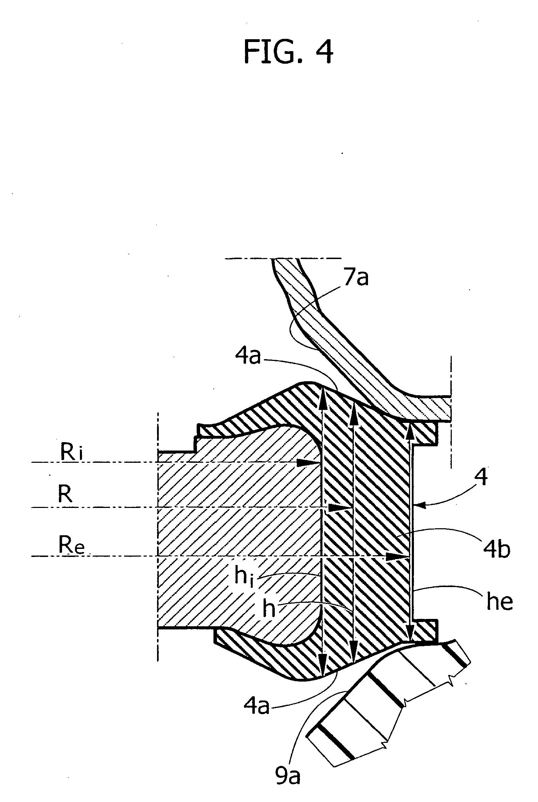

The internal sheet metal ring 7 and the body 9 made of plastic material present cam-shaped surfaces 7a and 9a cooperating with respective opposite front surfaces 4a (see Figure 4) of a main portion 4b of the bushing 4. The main portion 4b of the bushing 4 has an axial dimension h which substantially decreases linearly as the radius R increases (see Figure 4), whereby the aforementioned opposite surfaces 4a of the main portion 4b of the bushing body are substantially conical surfaces with axis coinciding with the axis S of the bushing 4. In the case of the example shown, the bushing 4 has a greater maximum axial dimension than the axial dimension of the aluminium ring 3 on which it is vulcanised. Hence, radially within the conical surfaces 4a the bushing presents countersunk surfaces connecting with the opposite surfaces of the ring 3.

Consequently, a force F tending to produce relative axial movement between the internal and external surfaces of the bushing 4 determines in the body of such a bushing a shearing stress that remains substantially uniform in the various points of the bushing body as it is distributed on a cylindrical surface that remains substantially constant as the radius varies. In particular, with reference to Figure 4, the isostress behaviour of the bushing according to the invention is obtained thanks to the fact that the following is valid:

$$R_i \cdot h_i = R_e \cdot h_e = R \cdot h,$$

wherein $R_i$ and $R_e$ are the internal and external radius of the main portion 4b of the bushing 4, $h_i$ and $h_e$ are the axial dimension of such portion 4b corresponding to the radii $R_i$ and $R_e$ and R and h are a general radius and the corresponding axial dimension.

Consequently, the shearing stress in any point of the main portion 4b of the bushing 4 is equal to:

$$\tau = F/A = F/(2\pi Rh)$$

wherein **F** is the axial force that causes a relative movement in an axial direction of the parts between which the bushing is interposed and **A** is the area of the cylindrical surface on which such a force is distributed.

In conclusion, wanting to obtain a substantially constant shearing stress $\tau$ in any point of the main portion of the bushing, it is necessary to have substantially constant cylindrical section areas, whereby as the radius increases the axial dimension of the bushing must decrease linearly in proportion.

Since the profile of the rubber bushing must therefore be chosen to satisfy the requirement of obtaining an "isostress" behaviour, the other requirement, that is obtaining engagement on a progressively increasing area between the cooperating surfaces of the bushing and the structure fixed onto the motor-vehicle, is satisfied thanks to a suitable conformation of the surfaces 7a and 9a of the structure 5 (in the specific case of the elements 7 and 9).

As can be seen in Figures 3 and 4, the conformation of the surfaces 7a and 9a is chosen such as to obtain the aforementioned gradual support in the same way as a progressive unwinding of the bushing profile above the surface 7a or above the surface 9a. The gradual nature of the support is hence obtained with a similar movement to rolling, which guarantees the perfect progressiveness of the variation in stiffness.

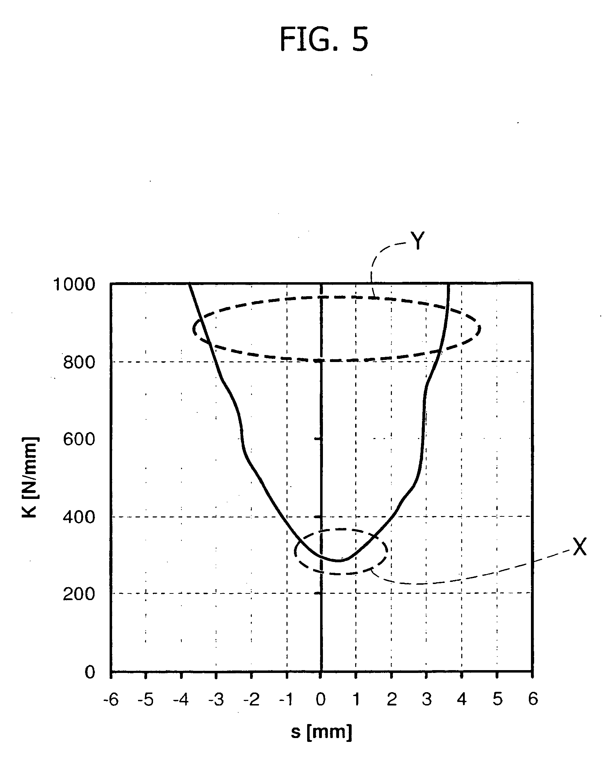

The diagram in Figure 5 shows the result obtained in terms of the stiffness variation. The diagram shows the variation in stiffness measured in Newton/mm, as the relative axial or radial movement increases in one direction or the other. The area indicated with X is that which corresponds to the running condition of the vehicle at cruising speed, in which the motion is stationary and the forces in play are small. In such conditions the filtering of the noise is more important than the handling and the axial and radial stiffnesses are kept small. As previously mentioned, since the forces are also small, it causes the movement to remain small anyway, whereby the good handling requirements are respected anyway.

The area indicated with Y corresponds to a transitory condition (for example acceleration, bend, disconnected road). In such a condition, the forces in play are large, whereby the good handling requirement is more important than filtering the noise. The necessary characteristics are obtained as the axial and radial stiffnesses are large. On the other hand, even if the forces in play are large, the high stiffnesses impose relatively small movements, whereby a good damping job of the shock-absorber is allowed and the dual function of the upright to drive the wheel and support the vehicle is respected.

Naturally, various modifications to the construction details and the embodiments can be possible, within the spirit of the invention according to that described and disclosed merely by way of example, without departing from the scope of the present invention.

## Claims

1. Resilient support device for the upper end of the stem of a shock-absorber of a motor-vehicle suspension, in particular a suspension having a MacPherson type architecture, said device comprising:

   - a first structure (5) defining a housing fixed to the bodywork of the motor-vehicle,
   - a second structure (3) fixed to the upper end of the stem of the shock-absorber, and
   - a bushing made of elastomer material (4) operatively interposed between said first and second structures (5,3), so that a relative movement of said first and second structures (5,3) in the direction of the axis of the bushing (4) produces a shearing stress in the body of the bushing (4), wherein said first structure (5) has cam-shaped surfaces (7a,9a), cooperating with respective opposite end surfaces (4a) of said bushing (4), said cam-shaped surfaces (7a,9a) have a conformation such that they come into contact with the respective end surfaces (4a) of the bushing through a progressively increasing area, following a relative axial movement, in one direction or the other, or a relative radial movement, of said first and second structures (5,3),

   **characterised in that**:

   - said bushing of elastomer material (4) includes a main portion (4b) having an axial dimension (h) that decreases substantially linearly radially outwardly, whereby said shearing stress is substantially uniform in all parts of said main portion (4b) of the body of the bushing (4), and **in that**
- each of said cam-shaped surfaces (7a, 9a) has a profile which, in the undeformed condition of the bushing (4), is spaced apart increasingly, radially inwardly, from the respective front surface (4a) of the bushing, starting from the peripheral outer edge of the bushing, such that a relative movement of said first and second structure (5,3) in a radial and/or axial direction determines a progressive increase in the stiffness of the bushing according to a substantially parabolic profile, with a minimum substantially corresponding to a zero movement when the bushing is in the undeformed condition.

2. Resilient support device according to claim 1, **characterised in that** said bushing (4) is received within a housing defined by the upper end (10a) of an annular body (9) made of plastic material, whose circumferential upper edge is received within the lower end of a sheet metal bell element (7), said cam-shaped surfaces being defined one by the internal surface (9a) of said annular body made of plastic material (9) and the other by the internal surface (7a) of said sheet metal bell element.

3. Resilient support device according to claim 2, **characterised in that** the bushing (4) made of elastomer material has its internal surface vulcanized above an aluminium ring fixed to the upper end of the stem of the shock-absorber and its external surface received with interference within the aforementioned housing (10a) defined by said annular body (9) made of plastic material, with the interposition of an auxiliary ring (6), also forced within said housing (10a).

**Patentansprüche**

1. Elastische Haltevorrichtung für das obere Ende der Kolbenstange eines Stoßdämpfers einer Kraftfahrzeugfederung, insbesondere einer Federung, die eine MacPherson-artige Architektur hat, wobei die Vorrichtung umfasst:

- eine erste Struktur (5), die ein Gehäuse definiert, das an der Karosserie des Kraftfahrzeugs befestigt ist,
- eine zweite Struktur (3), die an dem oberen Ende der Kolbenstange des Stoßdämpfers befestigt ist, und
- eine Buchse, die aus einem Elastomermaterial (4) besteht und wirkungsmäßig zwischen der ersten und der zweiten Struktur (5, 3) derart angebracht ist, dass eine Relativbewegung der ersten und der zweiten Struktur (5, 3) in der Richtung der Achse der Buchse (4) eine Scherspannung in dem Körper der Buchse (4) erzeugt, wobei die erste Struktur (5) nockenförmige Oberflächen (7a, 9a) hat, die mit entsprechenden gegenüberliegenden Stirnflächen (4a) der Buchse (4) zusammenwirken, und die nockenförmigen Oberflächen (7a, 9a) eine derartige Ausformung haben, dass sie mit den entsprechenden Stirnflächen (4a) der Buchse durch einen allmählich zunehmenden Bereich in Berührung kommen, worauf eine relative Axialbewegung in der ein oder der anderen Richtung oder eine relative Radialbewegung der ersten und der zweiten Struktur (5, 3) folgt,

**dadurch gekennzeichnet, dass**:

- die Buchse des Elastomermaterials (4) einen Hauptabschnitt (4b) umfasst, der eine Achsabmessung (h) hat, die im wesentlichen linear radial nach außen abnimmt, wobei die Scherspannung in sämtlichen Teilen des Hauptabschnittes (4b) des Körpers der Buchse (4) im wesentlichen einheitlich ist, und dadurch, dass
- jede der nockenförmigen Oberflächen (7a, 9a) ein Profil aufweist, das in dem unverformten Zustand der Buchse (4) von der entsprechenden Stirnfläche (4a) der Buchse, beginnend bei dem äußeren Umfangsrand der Buchse, zunehmend radial nach innen beabstandet ist, so dass eine Relativbewegung der ersten und der zweiten Struktur (5, 3) in einer radialen und/oder axialen Richtung eine allmähliche Zunahme der Steifigkeit der Buchse gemäß einem im wesentlichen parabolischen Profil bestimmt, wobei ein Minimum im wesentlichen einer Nullbewegung entspricht, wenn sich die Buchse in dem unverformten Zustand befindet.

2. Elastische Haltevorrichtung nach Anspruch 1, **dadurch gekennzeichnet, dass** die Buchse (4) in einem Gehäuse aufgenommen ist, das durch das obere Ende (10a) eines ringförmigen Körpers (9) definiert ist, der aus einem Kunststoffmaterial besteht und dessen oberer Umfangsrand in dem unteren Ende eines Metallblech-Glockenelementes (7) aufgenommen ist, wobei von den nockenförmigen Oberflächen die eine durch die Innenoberfläche (9a) des ringförmigen Körpers aus Kunststoffmaterial (9) und die andere durch die Innenfläche (7a) des Metallblech-Glockenelementes definiert ist.

3. Elastische Haltevorrichtung nach Anspruch 2, **dadurch gekennzeichnet, dass** bei der Buchse (4), die aus einem Elastomermaterial besteht, die Innenoberfläche über einem Aluminiumring vulkanisiert ist, der an dem oberen Ende der Kolbenstange des Stoßdämpfers befestigt ist, und die Außenoberfläche mit Eingriff in dem zuvor erwähnten Gehäuse (10a) aufgenommen ist, das durch den ringförmigen Körper (9) definiert ist, der aus einem Kunststoffmaterial besteht, wobei ein Zusatzring (6) dazwischen angeordnet ist, der ebenfalls in das Gehäuse (10a) gedrückt ist.

## Revendications

1. Dispositif de support résilient pour l'extrémité supérieure de la tige d'un amortisseur d'une suspension de véhicule à moteur, en particulier d'une suspension ayant une architecture de type MacPherson, ledit dispositif comprenant :

   - une première structure (5) définissant un logement fixé à la caisse du véhicule à moteur,
   - une seconde structure (3) fixée à l'extrémité supérieure de la tige de l'amortisseur, et
   - une douille faite d'un matériau élastomère (4) interposée de manière opérationnelle entre lesdites première et seconde structures (5, 3), de sorte qu'un mouvement relatif desdites première et seconde structures (5, 3) dans la direction de l'axe de la douille (4) produit une contrainte de cisaillement dans le corps de la douille (4), où ladite première structure (5) a des surfaces en forme de came (7a, 9a), coopérant avec des surfaces d'extrémité opposées respectives (4a) de ladite douille (4), lesdites surfaces en forme de came (7a, 9a) ont une conformation telle qu'elles viennent en contact avec les surfaces d'extrémité (4a) respectives de la douille par l'intermédiaire d'une aire augmentant progressivement, suivant un mouvement axial relatif, dans une direction ou l'autre, ou le mouvement radial relatif, desdites première et seconde structures (5, 3),

   **caractérisé en ce que** :

   - ladite douille de matériau élastomère (4) inclut une portion principale (4b) ayant une dimension axiale (h) qui diminue sensiblement linéairement radialement vers l'extérieur, moyennant quoi ladite contrainte de cisaillement est sensiblement uniforme dans toutes les parties de ladite portion principale (4b) du corps de la douille (4), et **en ce que**
   - chacune desdites surfaces en forme de came (7a, 9a) a un profil qui, dans la condition non déformée de la douille (4), est de plus en plus écarté, radialement vers l'intérieur, de la surface avant (4a) respective de la douille, en commençant depuis le bord externe périphérique de la douille, de telle sorte qu'un mouvement relatif desdites première et seconde structures (5, 3) dans une direction radiale et/ou axiale détermine une augmentation progressive de la raideur de la douille selon un profil substantiellement parabolique, avec un minimum correspondant substantiellement à un mouvement nul lorsque la douille est dans la condition non déformée.

2. Dispositif de support résilient selon la revendication 1, **caractérisé en ce que** ladite douille (4) est reçue au sein d'un logement défini par l'extrémité supérieure (10a) d'un corps annulaire (9) fait de matériau plastique, dont le bord supérieur circonférentiel est reçu au sein de l'extrémité inférieure d'un élément de cloche à tôle de métal (7), lesdites surfaces en forme de came étant définies l'une par la surface interne (9a) dudit corps annulaire fait de matériau plastique (9) et l'autre par la surface interne (7a) dudit élément de cloche à tôle de métal.

3. Dispositif de support résilient selon la revendication 2, **caractérisé en ce que** ladite douille (4) faite de matériau élastomère a sa surface interne vulcanisée au-dessus d'une bague en aluminium fixée à l'extrémité supérieure de la tige de l'amortisseur et sa surface externe reçue avec une interférence au sein du logement (10a) susmentionné défini par ledit corps annulaire (9) fait de matériau plastique, avec l'interposition d'une bague auxiliaire (6), également forcée au sein dudit logement (10a).

# FIG. 1

# FIG. 2

FIG. 3

# FIG. 3A

EP 2 110 273 B1

# FIG. 4

# FIG. 5

## FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5487535 A
- US 2005063630 A
- DE 4139377 A
- US 5186440 A
- EP 0063016 A
- FR 817658 A
- US 5449152 A
- US 3831920 A
- DE 8119912 U
- US 2352586 A
- US 4958812 A
- EP 1306238 A